# NOUVEAU FASCICULE DE BREVET EUROPEEN

(11) **EP 1 106 077 B2**
(45) Date de publication et mention de la décision concernant l'opposition: **08.09.2010**
(45) Mention de la délivrance du brevet: 15.10.2003
(21) Numéro de dépôt: 00870235.9
(22) Date de dépôt: 19.10.2000
(51) Int. Cl.: A23K 1/14, A23K 1/18, A23C 9/14, A23K 1/00

(54) **Lait de vache et produit d'alimentation d'une vache pour obtenir un tel lait**
Kuhmilch und Kuhfutter um eine solche Milch zu erhalten
Cow's milk and fodder for cows to obtain such a milk

(30) Priorité: 09.12.1999 EP 99870256
(43) Date de publication de la demande: 13.06.2001
(73) Titulaire: Dumoulin, 5300 Seilles (BE)
(72) Inventeur: VanVolsem, Thibaut, 5380 Pontillas (BE)
(74) Mandataire: Quintelier, Claude

(56) Documents cités:
- FR-A- 2 732 560
- FR-A- 2 768 025
- DHIMAN, T. R., ANAND, G. R., SATTER, L. D., AND PARIZA, M. W.: "Conjugated Linoleic Acid Content of Milk from Cows Fed Different Diets" JOURNAL OF DAIRY SCIENCE, vol. 82, octobre 1999 (1999-10), pages 2146-2156, XP002136453
- ZEGARSKA, Z., AND KUZDZAL-SAVOIE, S.: "Seasonal effects on the fatty acids content in milk fat" MILCHWISSENSCHAFT., vol. 43, no. 12, 1988, pages 777-779, XP002157645 VV GMBH VOLKSWIRTSCHAFTLICHER VERLAG. MUNCHEN., DE ISSN: 0026-3788
- FOCANT ET AL: '"The effect of vitamin E supplementation....' J.DAIRY SCI 81 1998, pages 1095 - 1101
- PROCEEDINGS OF THE NUTRITITION SOCIETY ,58: '"Targets and procedures for altering ruminant....' DEMEYER AND DOREAU 1999, pages 593 - 607
- J.DAIRY SCI, 80: '"Performance and profiles milk fatty....' CHOUINARD ET AL 1997, pages 334 - 342
- ANN ZOOTECH 42: '"Influence de L'extrusion de mélanges de graines...' CLINQUART ET AL. 1993, pages 130 - 131
- J.DAIRY SCI,76: '"Feed and animal facotrs influencing milk fat...' PALMQUIST ET AL 1993, pages 1753 - 1771
- GRONDSTOF 1630 LIJNZAAD RADAR N.V. 28 Mai 1996,
- J.DAIRY SCI.80: '"Potential to alter the content...' ASHES ET AL 1997, pages 2204 - 2212
- VAN KEMPEN AND JANSMAN: '"Recent advances in animal nutrition"' LOUGHBOROUGH , NOTTINGHAM UNIV. PRESS 1994, LEICESTERSHIRE, UK, pages 31 - 56
- '"nutrition changes milk composition"' STALLINGS 1998, pages 404 - 232
- J.OF NUTRITION: '"Dietary fatty acid sources affect....' KELLY ET AL 1998, pages 881 - 885
- VEERKAMP AND THOMPSON: '"A covariance function for feed intake...."' J.DAIRY SCI,82 1999, pages 1565 - 1573

## Description

La présente invention se rapporte à un lait de vache.

Le lait de vache représente une composante importante de l'alimentation humaine en tant que tel et il est également à la base de nombreux produits alimentaires comme par exemple : des fromages, des yaourts, des desserts lactés, des crèmes glacées.

Pour un apport quotidien moyen de 100 g de lipides, un tiers provient de la consommation de lait ou de produits laitiers. Plus de 70% des matières grasses contenues dans le lait sont des acides gras saturés alors que les acides gras insaturés (monoinsaturés et polyinsaturés) représentent moins de 30% des matières grasses totales du lait de vache.

Or, la qualité et la quantité des matières grasses alimentaires ingérées sont en relation avec la cholestérolémie, principal facteur de risque pour l'athérosclérose. L'ingestion excessive d'acides gras saturés à chaîne courte et de cholestérol est associée à un plus grand risque cardio-vasculaire car elle provoque l'augmentation de la lipidémie alors que l'ingestion d'acides gras saturés à chaîne longue et d'acides gras insaturés à chaîne longue diminue la lipidémie. Par ailleurs, les acides gras polyinsaturés (AGPI) et en particulier ceux appartenant à la classe des Oméga 3, comme l'acide alpha-linolénique, sont connus pour inhiber l'aggrégation plaquettaire et l'activité coagulante des plaquettes, c'est-à-dire que son rôle préventif de la thrombose chez l'homme a été démontré.

Les problèmes de santé humaine provoqués par un déséquilibre alimentaire, peuvent être prévenus par une diminution de la consommation d'acides gras saturés à chaîne courte.

En effet, il faudrait consommer une quantité maximale de matières grasses équivalente à 30% de l'énergie ingérée, dont la part constituée d'acides gras saturés devrait être inférieure à 33% des graisses totales. La part d'acides gras saturés représenterait environ 10% de l'énergie totale et la part d'acides gras insaturés serait d'environ 20% de l'énergie totale.

Cependant, la consommation actuelle de matières grasses par personne représente 43% de l'énergie ingérée et elle est, en outre, constituée de plus de 40% d'acides gras saturés.

Les matières grasses d'origine animale et, entre autres, celles des ruminants, sont souvent riches en acides gras saturés. Les acides gras insaturés représentent, en effet, moins de 30% des matières grasses du lait. Toutefois, le lait est un aliment important dans l'alimentation humaine par son contenu en protéines, en sels minéraux, en vitamines et en calcium. De plus, les acides gras du lait, qu'ils soient saturés (C6:0, C8:0, C10:0; C12:0; C14:0; C16:0; C18:0) ou insaturés (C18:1; C18:2; C18:3) sont nécessaires dans l'alimentation humaine, mais leurs proportions devraient être changées de façon à diminuer l'impact négatif, en particulier l'effet hypercholestérolémiant sur la santé humaine induit par la proportion trop importante d'acides gras saturés dans le régime alimentaire. De cette façon, les risques de maladies cardio-vasculaires qui représentent la première cause de mortalité dans les pays développés pourraient être diminués de manière significative (Renaud et al., 1995, Am. J. Clin. Nutr., 61 : 1360-1367).

Il faut souligner, parmi les acides gras polyinsaturés, l'importance des classes Oméga 3 et Oméga 6. Ces deux classes comprennent, entre autres, l'acide linoléïque (C18:2 Oméga 6) et l'acide alpha-linolénique (C18:3 Oméga 3), qui ne sont pas synthétisés par l'homme et devront être apportés par l'alimentation, ils sont pour cette raison appelés acides gras essentiels.

Il a été constaté que les Oméga 3 sont souvent déficitaires par rapport aux acides gras saturés dans l'alimentation humaine des pays développés, ce qui représente un problème important, puisque des études ont montré que les Oméga 3 avaient un effet préventif contre les problèmes cardio-vasculaires.

De plus, des études récentes (Parodi, J., Nutr., 1997, 127 : 1055-1060; Visionneau et al., Anticancer Res, 1997, 17 : 969-973) ont montré le rôle préventif des acides gras conjugués (CLA) contre la prolifération de cellules cancéreuses, or ces CLA peuvent être présents en plus grande quantité dans le lait que dans les huiles d'origine végétale. Ce CLA (C18:2 *cis*-9 *trans*-11) est reconnu pour ses vertus antitumorales et spécialement contre le cancer du sein. Le CLA (C18:2 *cis*-9 *trans*-11) influence fortement la morphogénèse du sein mais ses effets ne sont pas limitatifs quant à ses vertus antitumorales.

Des tentatives pour obtenir du lait plus riche en acides gras insaturés et moins riche en acides gras saturés ont été faites en utilisant des graines de colza seules (Murphy M. et al., 1987, J. Dairy Sci., 70 : 1572), ou associées à du lin (FR-A-2768025) des graines de coton (Coppock C.E. et al., 1990, J. Dairy Sci., 73: 1051), ou du soja (Y.K. Kim et al., J. Dairy Sci., 76 : 197-204, 1993) pour fabriquer des aliments pour vaches laitières. Celles-ci produisant du lait avec un spectre d'acides gras dans lequel il y avait plus d'acides gras insaturés et moins d'acides gras saturés que dans un lait produit par des vaches ne recevant pas les aliments précités. Cependant la teneur en Oméga 3, en Oméga 6 et en acides gras conjugués n'est pas prise en compte dans ces travaux, bien qu'ils constituent des éléments très importants en terme de valeur nutritionnelle.

L'invention a pour but d'obtenir, d'une part, un lait qui, par sa nouvelle teneur en acides gras saturés et insaturés et, en particulier par sa teneur élevée en acides gras conjugués (C18:2 *cis*-9 *trans*-11) et en acides gras polyinsaturés de la classe des Oméga 3 tels que l'acide alpha-linolénique, a des effets bénéfiques sur la santé humaine, en particulier, un effet préventif des maladies cardio-vasculaires et de la cancérogenèse.

A cette fin, un lait de vache suivant l'invention est prévu dont la teneur en acides gras, déterminée par chromatographie en phase gazeuse, pour 100 g d'acides gras est comprise entre les valeurs suivantes :

| pour les acides gras saturés à chaîne courte et moyenne : | |
|---|---|
| acide caproïque C6:0 | 1,7 - 2,7 g |
| acide caprilique C8:0 | 1 - 1,6 g |
| acide caprique C10:0 | 1,6 - 4,20 g |
| acide laurique C12:0 | 2,80 - 4,25 g |
| acide myristique C14:0 | 10,50 - 13,0 g |
| acide palmitique C16:0 | 23,90 - 31,60 g |

| pour les acides gras saturés à chaîne longue : | |
|---|---|
| acide stéarique C18:0 | 12,50 -17,40 g |

| pour les acides gras insaturés à chaîne longue : | |
|---|---|
| acide vaccinique C18:1 *trans*-11 | 2,50-6, 00 g |
| acide oléïque C18:1 *cis*-9 *+cis*-11 | 24,00 - 29,00 g |
| acide linoléïque C18:2 *cis*-9-12 | 1,60 - 3,90 g |
| acide linoléïque C18:2 *trans*-9-12 | 0,50 - 1,00 g |
| acide linolénique C18:3 *cis*-9-12-15 | 0,60 - 1,20 g |
| acide gras conjugué (acide ruminique C18:2 *cis*-9 *trans*-11) | 0,70 - 3,35g |

et la teneur totale en acides gras saturés est comprise entre 60,30 g et 68,15 g, la teneur totale en acides gras monoinsaturés est comprise entre 28,68 g et 39,20 g, la teneur totale en acides gras insaturés est comprise entre 32,85 g et 39,70 g, la teneur totale en acides gras polyinsaturés est comprise entre 3,15 g et 4,65 g, la teneur totale en acides gras à chaîne longue (≥C18) est comprise entre 40 et 51 g, la valeur du rapport C16:0/C18:1 *cis* est comprise entre 0,68 et 1,20 et la valeur du rapport Oméga 6/Oméga 3 est comprise entre 2,5 et 5.

Le lait suivant la présente invention présente une valeur diététique supérieure à celle du lait de vache communément disponible dans le commerce. En effet, pour une quantité égale de lait ingéré, la quantité d'acides gras saturés à chaîne courte et moyenne est significativement plus faible pour le lait suivant l'invention, tout en fournissant une quantité supérieure d'acides gras saturés à chaîne longue, d'acides gras insaturés (monoinsaturés, polyinsaturés) à chaîne longue et d'acides gras conjugués (CLA) qui doivent impérativement être présents dans l'alimentation humaine, de façon à apporter les bénéfices sur la santé décrits précédemment. Les produits à base de lait, et les produits dérivés du lait suivant l'invention font également partie de la présente invention. Le rapport C16:0/C18:1 *cis* qui est toujours inférieur à 1,20 a pour conséquence que le beurre produit à partir du lait de l'invention a une meilleure tartinabilité.

La présente invention prévoit également un aliment pour vache laitière destinée à la production de lait comprenant, sous forme extrudée, des graines de lin ainsi que d'autres composants, cet aliment comprenant les composants suivant sous forme extrudée : plus de 50 % à 99 % de graines de lin, 1 à 30 % de blé, 1 à 20 % de graines de légumineuses, ces composants étant combinés de façon à ce que le taux de matières grasses totales dudit aliment soit compris entre 23 et 30 %. En effet, les graines de lin comprennent au moins 55 % de C18:3 Oméga 3 (acide alpha-linolénique) par rapport à l'ensemble des acides gras.

De plus, le procédé d'extrusion prévu par la présente invention dans le procédé de fabrication dudit aliment, conserve ce pourcentage important d'Oméga 3 dans l'aliment suivant l'invention, fabriqué à base de graines de lin. En effet, la graine de lin s'avère être la graine oléagineuse la plus riche en C18:3 Oméga 3 et la teneur finale d'Oméga 3 dans l'aliment est proportionnelle à celle de la graine oléagineuse utilisée pour fabriquer l'aliment. Cette proportionnalité est obtenue grâce au procédé d'extrusion utilisé dans la fabrication de l'aliment suivant l'invention.

Cet aliment comprend, suivant l'invention, les composants suivants sous forme extrudée : 50 à 99% de graine de lin, 1 à 30% de blé, 1 à 20% de graines de légumineuses, ces composants étant combinés de façon à ce que le taux de matières grasses totales dudit aliment soit compris entre 23 et 30%. L'aliment suivant l'invention peut également comprendre d'autres pourcentages des différents composants ainsi que d'autres composants, ces composants étant combinés de façon à ce que le taux de matières grasses totales dudit aliment soit compris entre 23 et 30%.

Il est prévu suivant l'invention un procédé d'alimentation de la vache laitière, dans lequel un aliment suivant l'invention est ajouté à la ration alimentaire quotidienne de base de la vache laitière. Ladite ration alimentaire quotidienne peut être à base d'ensilage de maïs, à base d'herbe pâturée, ou ensilée ou tout autre fourrage communément utilisé en Europe, en fonction de la période de l'année et suivant que la vache se trouve donc à l'étable ou au pré. La dose de l'aliment de l'invention, par vache et par jour, est à ajouter à raison de :
. 10 à 12 % de la matière sèche totale ingérée pour les rations hivernales (ensilage de maïs, ensilage d'herbe, foin ou autres fourrages hivernaux),
. 0,5 à 0,8 kilos si l'ingestion d'herbe pâturée est de 10 kilos de matière sèche par jour,
. 1,0 à 1,2 kilos si l'ingestion d'herbe pâturée est de 7 kilos de matière sèche par jour,
. 1,3 à 1,5 kilos si l'ingestion d'herbe pâturée est de 5 kilos de matière sèche par jour.

Il est important de ne pas confondre herbe pâturée et herbe ensilée et foin séché au sol ou en grange.

L'invention concerne également un procédé de fabrication de l'aliment, qui comporte les étapes suivantes : le dosage, le broyage et le mélange des ingrédients suivis d'une étape d'extrusion par voie humide à une température comprise entre 80 et 150°C, puis un séchage de l'aliment produit après séchage qui contient au plus 9% d'eau.

La présente invention sera maintenant décrite plus en détail par un exemple décrivant toutes les étapes de la fabrication de l'aliment suivant l'invention, du procédé d'alimentation de vaches laitières suivant l'invention, et du lait de vache obtenu suivant l'invention.

Les symboles suivants seront utilisés dans la description : par exemple C10:0, C18:2 qui sont bien connus de l'homme de l'art, voir, par exemple, "Biochemistry", (L. Stryer, 1981, 2^{nd} Edition, W.H. Freeman and Company, San Francisco).

Parmi les acides gras du lait, l'acide linoléique (Oméga 6) et l'acide linolénique (Oméga 3) sont dits essentiels car ils ne sont pas synthétisables par les mammifères, et donc par l'homme. L'acide linoléique et l'acide linolénique doivent donc impérativement être fournis par l'alimentation car ils sont les précurseurs d'autres acides gras polyinsaturés à longue chaîne jouant également un rôle très important dans la prévention des maladies cardio-vasculaires. Les acides gras conjugués ou CLA (conjugated linoleic acid, isomère de l'acide linoléique) sont capables d'empêcher la prolifération des cellules cancéreuses et de freiner la progression du cancer (Parodi J, J. Nutr. 1997, 127 : 1055-1060).

Les chaînes courtes saturées des acides gras du lait sont essentiellement synthétisées au niveau des cellules du pis par l'apport d'acide acétique et butyrique venant du rumen. Les chaînes longues saturées et insaturées des acides gras du lait proviennent de l'alimentation. Les microorganismes du rumen ont tendance à hydrogéner et donc à saturer les acides gras alimentaires.

L'alimentation de la vache laitière se compose de fourrages de base par exemple d'herbe, de foin, d'ensilage d'herbe, d'ensilage de maïs et d'un concentré alimentaire comprenant au moins des protéines, des matières grasses et des hydrates de carbone. Il faut donc protéger ces matières grasses alimentaires ajoutées, comprenant des acides gras insaturés, de l'hydrogénation dans le rumen.

Pour ce faire, on utilise un procédé d'extrusion de l'aliment. Ce procédé est un traitement hydrothermique aboutissant à la formation de complexes entre les lipides et l'amidon, les acides gras complexés échappant ainsi partiellement à l'hydrogénation.

L'extrusion de l'aliment a les effets suivants la gélatinisation de l'amidon, la protection des protéines et la destruction de facteurs antinutritionnels.

L'extrusion est le procédé préféré utilisé dans le cadre de la présente invention, dans la fabrication d'un aliment pour vaches laitières. L'extrusion en tant que telle est un procédé bien connu de l'homme du métier, voir, par exemple, (Melcion J.P., 1987, Oléo-protéagineux et cuisson-extrusion. Pp 235-248 in : "Cuisson Extrusion". C. Colonna, ed. Inst. Natl. Rech. Agron., Paris). Ce document est incorporé à titre de référence dans la présente invention.

L'extrusion consiste donc à forcer un aliment à s'écouler à travers un orifice de petites dimensions appelé la filière, sous l'action de pressions très élevées obtenues par l'action d'une vis de type Archimède tournant dans l'alésage d'une enveloppe fixe appelée fourreau. L'extrusion même est de courte durée, puisqu'elle n'excède pas 30 secondes. Elle est accompagnée d'un apport de chaleur qui permet une élévation instantanée de la température jusqu'à une valeur comprise entre 80 et 150°C.

Par exemple, dans le cas de graines de lin, l'extrusion permet de détruire des glucosides cyanogènes (linustatine, linamarine et néolinustatine) et la linatine qui est une molécule inhibitrice de l'action de la vitamine B6.

Pour fabriquer un aliment suivant la présente invention, un protocole d'extrusion sous voie humide au moyen d'une extrudeuse Wenger X-235 a été mis au point. Dans un mode de réalisation préféré, ce protocole comprend les étapes suivantes.

Les ingrédients entrant dans la composition de l'aliment pour vaches laitières sont tout d'abord sélectionnés puis pesés. Dans un mode préféré de réalisation, l'aliment suivant l'invention comprend les composants suivants : 66% de graines de lin, 20% de blé, et 14% de graines de légumineuses. Ces dernières peuvent être composées de pois, de féveroles ou de haricots, seuls ou en mélange. Ces ingrédients sont alors broyés et mélangés. La farine obtenue est stockée dans un silo avant l'extrusion. L'extrusion comporte les trois étapes suivantes :
- le conditionnement de la farine : elle est chauffée à une température comprise entre 80 et 95°C en injectant de la vapeur de 200 à 400 kg/h et d'eau à raison de 2 à 3 l/min,
- l'extrusion proprement dite : la farine conditionnée est amenée dans l'extrudeur et subit une élévation de température allant jusqu'à une température comprise entre 80 et 150°C avec une injection de vapeur de 100 à 300 kg/h et de 2 à 3 l d'eau/min,
- le séchage : à la sortie de l'extrudeuse, la croquette formée est séchée dans un séchoir comportant trois zones, une première zone de séchage à 75°C, une deuxième zone de séchage à 85°C et une zone de refroidissement.

L'ensemble des trois étapes dure 45 min. Le produit final est un aliment qui a un taux d'humidité maximum de 9%. L'ensemble du procédé d'extrusion se fait à un débit de 4500 à 5000 kg/h.

Une corrélation étroite a été établie entre l'addition de l'aliment décrit ci-dessus dans l'alimentation de vaches laitières et la composition du spectre d'acides gras du lait produit par ces vaches.

Cet aliment a été introduit dans le régime alimentaire de vaches laitières à différentes saisons. L'exemple suivant illustre l'alimentation de vaches laitières qui sont à l'étable pendant l'hiver. Cependant, l'objet de l'invention s'étend également au régime des vaches laitières pendant les autres saisons où elles sont au pré et que leur ration alimentaire quotidienne de base est constituée d'herbe pâturée.

Deux troupeaux d'une cinquantaine de vaches chacun, comprenant des vaches laitières de race Holstein (640 ± 50 kg) produisant plus de 25 kg de lait par jour, ont été nourries de la façon suivante pendant la saison hivernale (plus de 150 jours).

Le troupeau témoin 1 a reçu chaque jour une ration de base classique comprenant en moyenne 21 kg de matière sèche, la nourriture préparée dans une mélangeuse, étant à disposition des vaches. Cette ration de base est montrée dans le Tableau 1.

**Tableau 1**

| Ration alimentaire quotidienne des vaches du troupeau 1 | |
|---|---|
| Ration de base quotidienne | Quantité de matière sèche (kg) |
| Ensilage d'herbe | 3,3 |
| Ensilage de maïs | 9,9 |
| Paille | 0,8 |
| Orge, blé | 2,6 |
| Soja 50 (50% de protéines) | 3,1 |
| Tourteau de colza (33% de protéines) | 1,3 |

Le troupeau 2 a reçu chaque jour pendant la même période dans les même conditions que le troupeau témoin 1, une ration de base classique, additionnée de l'aliment suivant la présente invention. La composition de cette ration, est montrée dans le Tableau 2.

**Tableau 2**

| Ration alimentaire quotidienne des vaches du troupeau 2 | |
|---|---|
| Ration de base quotidienne | Quantité de matière sèche (kg) |
| Ensilage d'herbe | 2,4 |
| Ensilage de maïs | 9,1 |
| Foin | 1,3 |
| Orge, blé | 0,8 |
| Drèches | 1,8 |
| Maïs | 2,6 |
| Concentré de protéines (42%) | 2,2 |
| Aliment de l'invention | 1,8 |

En effet, l'aliment suivant la présente invention a été donné quotidiennement à des vaches laitières à raison d'une ration de 1,8 kg de matière sèche par jour.

Il est bien entendu que cet exemple est donné à titre d'illustration et ne limite en rien la portée de l'invention. En effet les rations alimentaires peuvent comprendre d'autres aliments suivant la période de l'année. L'aliment suivant l'invention peut aussi être donné à la vache en complément d'herbe pâturée.

Le lait produit par les vaches des troupeaux 1 et 2 a été analysé par chromatographie en phase gazeuse. Le protocole d'analyse utilisé est décrit ci-dessous.

Trois litres de lait sont écrémés, la crème est stockée à 4°C. Elle est ensuite barattée et le beurre obtenu est fondu au bain-marie à 45°C. Il est alors congelé à -20°C pendant une nuit. Après liquéfaction, le beurre est centrifugé pendant 10 min avec une force de 350 g, à la température de 45°C. La matière grasse est récupérée, filtrée (filtre S&S 595) et déshydratée sur sulfate de sodium. La matière grasse liquide anhydre obtenue est conservée sous atmosphère d'azote à -20°C.

A partir de cette matière grasse, des esters méthyliques (FAME) sont préparés suivant un protocole adapté du Journal Officiel des Communautés Européennes : "Méthode d'analyse communautaire à utiliser pour la détermination de la teneur en acide érucique, en ce qui concerne les graines prises en charge par les organismes d'intervention", n° L 12/12 à L 12/18 du 15/01/77.

Ce protocole adapté comprend les étapes suivantes : 0,5 g de matière grasse est mélangé, dans un tube à bouchon, à 10 ml d'une solution KOH-méthanol 0,1 M. L'ensemble est chauffé pendant une heure à 70°C sous agitation. Le mélange est alors refroidi à température ambiante et ensuite additionné de 4 ml d'une solution HCI-méthanol 1,2 N. Après agitation, les tubes sont chauffés au bain-marie à 70°C pendant 15 minutes. Après refroidissement à température ambiante, 10 ml d'eau et 20 ml d'hexane sont ajoutés. Le mélange est agité vigoureusement pendant quelques secondes puis décanté une nuit à 4°C. La phase hexane est alors diluée et le standard interne (C11:0) est ajouté. L'échantillon est prêt à être injecté dans un chromatographe en phase gazeuse à raison de 0,5 µl. La séparation des esters méthyliques est réalisée sur une colonne SGE BPX 70 (60 m x 0,22 mm i.d., film de 0,25 micron) en utilisant l'hélium comme gaz vecteur (pression de 2 kg/cm²). La température de l'injecteur est la température du four au moment de l'injection, c'est-à-dire 70°C. La température du détecteur est de 240°C. Pour chaque analyse, la température de la colonne est programmée: 70°C pendant 3 min, augmentation de la température de 15°C/min jusqu'à 175°C, puis de 3°C/min jusqu'à 205°C. La température finale de 205°C est maintenue pendant 12 min. Le chromatographe est ensuite refroidi jusqu'à 70°C à raison de 15°C/min. Les acides gras sont identifiés par rapport aux temps de rétention d'acides gras achetés sous forme d'esters méthylés (FAME, solution standard). La concentration de chaque acide gras présent dans la solution étant connue avec précision, il est possible à l'aide d'une règle de trois, de calculer la quantité de chaque acide gras présente dans un échantillon de matière grasse.

Le Tableau 3 montre la composition en acides gras analysée suivant la méthode décrite et établit la comparaison entre le lait dit classique, c'est-à-dire que les vaches produisant ce lait ont été alimentées avec la ration montrée dans le Tableau 1, et le lait suivant la présente invention produit par des vaches alimentées avec la ration montrée dans le Tableau 2, qui comprend l'aliment suivant la présente invention. Une comparaison a été également faite avec des vaches au pré dont la ration alimentaire est donc à base d'herbe pâturée, le lait produit par ces vaches, désigné comme lait classique (herbe pâturée), a été analysé et les résultats sont montrés dans le Tableau 3. Le profil d'acides gras des différents laits produits par des vaches laitières varie suivant le régime alimentaire des vaches.

**Tableau 3**

| Comparaison de la composition en acides gras du lait classique de vaches alimentées à base de maïs ou à base d'herbe, et du lait suivant l'invention. de vaches recevant l'aliment suivant l'invention | | | | |
|---|---|---|---|---|
| Acides gras du lait | Lait classique (ration Tableau 1) | Lait classique (herbe pâturée) | Lait suivant l'invention | Intérêt du lait suivant invention |
| C6:0 | 2,39 | 2,66 | 1,78 | ↘ |
| C8:0 | 1,54 | 1,45 | 1,18 | ↘ |
| C10:0 | 4,04 | 3,79 | 2,98 | ↘ |
| C12:0 | 4,47 | 4,11 | 2,82 | ↘ |
| C14:0 | 14,23 | 12,34 | 10,51 | ↘ |
| C16:0 | 36,95 | 27,50 | 28,06 | ↘ |
| C16:1 *Cis* | 1,89 | 1,56 | 1,38 | = |
| C17:0 | 0,50 | 0,56 | 0,60 | = |
| C18:0 | 9,55 | 12,07 | 14,36 | ↗ |
| C18:1 *Trans*-11 | 1,43 | 4,80 | 4,19 | = ↗ |
| C18:1 *Cis* 9+*Cis* 11 | 20,49 | 24,39 | 27,53 | ↗ |
| C18:2 *Cis* 9-12 | 1,58 | 1,19 | 2,00 | ↗ |
| C18:2 *Trans* 9-12 | 0,2 | 0,95 | 0,74 | ↗ |
| C18:3 *Cis* 9-12-15 | 0,34 | 0,89 | 0,67 | ↗ |
| Acide gras conjugué : | 0,4 | 1,73 | 1,20 | ↗ |
| (C18:2 *Cis* 9 *Trans* | | | | |
| acide ruminique) | | | | |
| à chaîne longue (≥C18) | 33,99 | 46,02 | 50,69 | |
| saturés totaux | 73,67 | 64,49 | 62,29 | |
| monoinsaturés totaux | 23,81 | 30,75 | 33,10 | |
| polyinsaturés totaux | 2,52 | 4,76 | 4,61 | |
| insaturés totaux | 26,33 | 35,51 | 37,71 | |
| C16:0/C18:1 *Cis* | 1,80 | 1,13 | 1,02 | |
| Oméga 6/Oméga 3 | 5,23 | 2,40 | 4,08 | |
| ↘ Diminution par rapport au lait classique | | | | |
| = équivalent herbe pâturée | | | | |
| ↗ Augmentation par rapport au lait classique | | | | |

On constate que le lait de l'invention et le lait de l'herbe pâturée sont proches. Le but majeur de l'invention est d'obtenir un lait constant toute l'année quant à sa composition en acide gras. Le lait de l'invention qui est constant a ainsi comme vertu d'être très proche de la qualité du lait obtenu à partir d'herbe pâturée.

C16:1 *Cis* et C17:0 sont constants entre les trois types de ration, ils sont repris dans le Tableau 3 à titre d'information.

L'obtention d'un tel spectre d'acides gras dans le lait suivant l'invention dépend de la conjugaison de plusieurs facteurs dont la présence de graines de lin dans l'aliment de l'invention. En effet, il est indispensable que cette graine oléagineuse soit en quantité suffisante dans l'aliment et que le procédé de fabrication de l'aliment ne dénature pas les Oméga 3 contenus dans la graine de lin. Or le procédé d'extrusion mis au point dans le cadre de la présente invention conserve effectivement sa haute teneur en Oméga 3 (au moins 55 % des acides gras de la graine de lin sont constitués de C18:3 Oméga 3). L'aliment de l'invention ajouté à la ration quotidienne de la vache laitière est donc riche en C18:3 Oméga 3. Cependant, il faut veiller à donner une certaine quantité journalière à la vache d'aliment de l'invention de façon à obtenir un spectre d'acides gras présentant des qualités en terme de diététique. En effet, si les doses journalières d'aliment de l'invention données à la vache laitière sont augmentées au-delà de ce qui est décrit dans la présente invention, il a été observé que l'augmentation des acides gras conjugués et particulièrement le C18:2 *cis*-9 *trans*-11 s'accompagne de l'apparition de C18:1 *trans*-11. Ce C18:1 *trans*-11 partage les avis scientifiques sur ses vertus encore mal connues. Des études récentes (ADLOF - RO, DUVAL - S, EMKEN - Eac Biosynthesis of conjugated linoleic acid in humans, Lipids - Feb. 2000, 35(2) 131-135) ont mis en évidence que l'organisme humain est capable de désaturer le C18:1 *trans*-11 en C18:2 *cis* 9 *trans*-11. Ce C18:1 *trans*-11 s'avère être un acide gras intéressant puisque précurseur de l'acide gras conjugué au niveau du métabolisme humain. Le C18:1 *trans*-11 est le principal C18:1 *trans* que l'on retrouve dans le lait.

Le lait suivant la présente invention peut donc comprendre des quantités d'acides gras qui sont comprises dans une gamme de teneurs. Ces teneurs sont montrées dans le Tableau 4 ci-dessous et sont comparées avec les gammes de teneurs correspondantes pour le lait classique produit par des vaches nourries avec des rations alimentaires classiques, ainsi que pour le lait produit par des vaches nourries avec des rations alimentaires à base d'herbe pâturée.

**Tableau 4**

| Comparaison des gammes des teneurs d'acides gras du lait suivant l'alimentation donnée aux vaches | | | | |
|---|---|---|---|---|
| Acides gras du lait | Lait classique | Lait classique (herbe pâturée) | Lait suivant l'invention | Intérêt lait invention |
| C6:0 | 2,3-3 | 2,5-2,8 | 1,7-2,7 | ↘ |
| C8:0 | 1,5-1,9 | 1,3-1,5 | 1-1,6 | ↘ |
| C10:0 | 4-5 | 3,7-4 | 1,60-4,20 | ↘ |
| C12:0 | 4,5-5 | 3,8-4,2 | 2,80-4,25 | ↘ |
| C14:0 | 14-15 | 11,5-13 | 10,50-13,0 | ↘ |
| C16:0 | 37-42 | 25-30 | 23,90-31,60 | ↘ |
| C18:0 | 9-11 | 11-12,5 | 12,50-17,40 | ↗ |
| C18:1 *Trans*-11 | 0,5-1,0 | 4,0-7,0 | 2,5-6,0 | = |
| C18:1 *Cis*-9+*Cis*-11 | 18-21 | 23,0-26 | 24-29 | ↗ |
| C18:2 *Cis*-9-12 | 1,8-2,3 | 1,8-2,3 | 1,60-3,90 | = |
| *C18:2 Trans 9-12* | 0,2-0,5 | 0,5-1,0 | 0,5-1,0 | = |
| C18:3 *Cis*-9-12-15 | 0,2-0,45 | 0,7-0,9 | 0,60-1,20 | ↗ |
| Ac. gras conjugué: | < 0,4 | 1,5-2,4 | 0,7-3,35 | ↗ |
| C18:2 *Cis*-9 *Trans* 11 | | | | |
| chaîne longue (≥C18) | 32-37 | 45-48 | 40-51 | |
| saturés totaux | 72-77 | 61-67 | 60,30-68,15 | |
| monoinsaturés totaux | 21-25 | 29-31 | 28,68-39,20 | |
| polyinsaturés totaux | 2,2-2,8 | 3,5-4,8 | 3,15-4,65 | |
| insaturés totaux | 22-28 | 33-39 | 32,85-39,70 | |
| C16:0/C18:1 *Cis* | 1,6-2 | 0,8-1 | 0,68-1,20 | |
| Oméga 6/Oméga 3 | 5-10 | 1,9-2,7 | 2,5-5 | |
| ↘ Diminution par rapport au lait classique | | | | |
| = Equivalent herbe pâturée | | | | |
| ↗ Augmentation par rapport au lait classique | | | | |

L'équilibre des apports entre les différents acides gras est un enjeu important en nutrition. Cependant, il est difficile à réaliser car les acides gras à considérer sont nombreux et ont des rôles physiologiques multiples et complexes. Il faut éviter de simplifier abusivement en opposant les acides gras saturés et les acides gras insaturés. Le lait de l'invention présente un spectre d'acides gras qui représente un équilibre très satisfaisant du point de vue de ses qualités nutritionnelles et diététiques. De plus, des études citées précédemment ont montré les bienfaits en terme de protection contre les maladies cardio-vasculaires et contre la cancérogenèse quand une certaine quantité de certains acides gras était présente dans l'alimentation humaine. Ce lait présente des caractéristiques telles qu'il contribue à une alimentation équilibrée en acides gras.

Les gammes de valeurs d'acides gras du lait suivant l'invention, mesurées par chromatographie en phase gazeuse, font ressortir les points suivants :
- la quantité d'acides gras saturés totaux a diminué par rapport à celle mesurée dans les laits classiques, mais dans cette classe d'acides gras, les acides gras saturés à chaîne longue ont quant à eux augmenté, ce qui est intéressant car ces acides gras saturés ont des fonctions importantes,
- la quantité d'acides gras insaturés totaux, par contre, a augmenté par rapport à celle mesurée dans les laits classiques, ce qui a pour effet de diminuer la lipidémie,
- les acides gras saturés à chaîne courte et moyenne ont diminué par rapport aux laits classiques, or il est important de les diminuer, mais sans les supprimer. En effet, ces acides gras ne présentent des effets négatifs en terme de maladies cardio-vasculaires que s'ils sont ingérés en quantités trop importantes par rapport aux acides gras insaturés.

L'alimentation humaine doit impérativement fournir tout au long de la vie les deux acides gras essentiels que sont l'acide linoléïque (C18:2 Oméga 6) et l'acide alpha-linolénique (C18:3 Oméga 3). Ces acides gras conduisent, après leur absorption, à la synthèse spécifique d'acides gras polyinsaturés à plus longue chaîne tels que l'acide arachidonique et l'acide docosahexaénoïque (DHA) que l'on retrouve dans toutes les membranes biologiques. Le rapport entre ces deux acides gras ne doit pas être déséquilibré en faveur des Oméga 6 par rapport aux Oméga 3. Ce rapport est équilibré dans le lait de l'invention par rapport au lait produit par des vaches nourries à base d'aliment classique.

Un autre acide gras très important est l'acide gras conjugué C18:2 *cis*-9 *trans*-11 (CLA). Les matières grasses du lait en contiennent beaucoup plus que les matières grasses d'origine végétale. Or il a été démontré expérimentalement que le CLA est capable d'empêcher la prolifération des cellules cancéreuses. Le lait de l'invention est plus riche en CLA que le lait classique produit par des vaches n'ayant pas d'aliment de l'invention dans leur régime alimentaire.

En outre, le rapport C16:0/C18:1 *cis*, connu de l'homme de l'art pour représenter l'index de dureté et de tartinabilité des matières grasses du lait, a une valeur telle que le beurre fabriqué à partir du lait de l'invention est frigotartinable.

Le lait de l'invention est constant tout au long de l'année et se rapproche du lait obtenu par une alimentation à base d'herbe pâturée. Quoi de plus "naturel" qu'un lait produit à base d'herbe pâturée; cette qualité, le lait de l'invention permet de la garder tout au long de la saison et de l'année.

## Revendications

1. Aliment pour vache laitière destinée à la production de lait comprenant, sous forme extrudée, des graines de lin ainsi que d'autres composants, **caractérisé en ce qu'**il comprend les composants suivants sous forme extrudée : plus de 50 à 99% de graines de lin, 1 à 30% de blé, 1 à 20% de graines de légumineuses, ces composants étant combinés de façon à ce que le taux de matières grasses totales dudit aliment soit compris entre 23 et 30%.

2. Aliment pour vache laitière suivant la revendication 1, **caractérisé en ce qu'**il comprend sous forme extrudée : 66 % de graines de lin, 20 % de blé et 14 % de grains de légumineuses.

3. Utilisation d'un aliment suivant l'une quelconque des revendications 1 à 2 pour la réalisation d'une ration alimentaire destinée à une vache laitière.

4. Utilisation d'un aliment suivant l'une quelconque des revendications 1 à 2, **caractérisée en ce que** ledit aliment est ajouté à une ration alimentaire quotidienne à base de fourrage hivernal qui est choisi notamment parmi: ensilage de maïs, ensilage d'herbe, foin.

5. Utilisation suivant la revendication 4, **caractérisée en ce qu'**une dose d'aliment correspondant à 10 à 12% de matière sèche totale ingérée est ajoutée à la ration alimentaire quotidienne à base de fourrage hivernal.

6. Utilisation suivant d'un aliment suivant l'une quelconque des revendications 1 à 2, **caractérisée en ce que** ledit aliment est ajouté à une ration alimentaire quotidienne à base d'herbe pâturée.

7. Utilisation suivant la revendication 6, **caractérisée en ce qu'**une dose d'aliment de 0,5 à 1,5 kg de matière sèche est ajoutée à la ration alimentaire quotidienne à base d'herbe pâturée.

8. Lait de vache susceptible d'être obtenu à l'aide de l'aliment selon l'une quelconque des vevendications 1 à 2 ou pas utilisation de cet aliment suivant l'une quelconques des revendications 3 à 7, dont la teneur en acides gras est déterminée par chromatographie en phase gazeuse, **caractérisé en ce que** ladite teneur en acides gras pour 100 g d'acides gras totaux est comprise entre les valeurs suivantes :
| pour les acides gras saturés à chaîne courte : | |
|---|---|
| acide caproïque C6:0 : | 1,7 - 2,7 g |
| acide caprylique C8:0 : | 1 - 1,6 g |
| acide caprique C10:0 : | 1,6 - 4,20 g |
| acide laurique C12:0: | 2,80- 4,25 g |
| acide myristique C14:0 | 10,50 - 13,0 g |
| acide palmitique C16:0 : | 23,90 - 31,60 g |
| pour les acides gras saturés à chaîne longue : | |
|---|---|
| acide stéarique C18:0 | 12,50 -17,40 g |
| pour les acides gras insaturés à chaîne longue : | |
|---|---|
| acide vaccinique C18:1 *trans*-11 | 2,50 - 6, 00 g |
| acide oléique C18:1 *cis*-9+*cis*-11 | 24,00 - 29,00 g |
| acide linoléique C18:2 *cis*-9-12 | 1,60 - 3,90 g |
| acide linoléique C18:2 *trans*-9-12 | 0,50 - 1,00 g |
| acide linolénique C18:3 *cis*-9-12-15 | 0,60 - 1,20 g |
| acide gras conjugué (acide ruminique C18:2 *cis*-9 *trans*-11) | 0,70 - 3,35 g |
et la teneur totale en acides gras saturés est comprise entre 60,30 g et 68,15 g, la teneur totale en acides gras à chaîne longue (≥C18) est comprise entre 40 et 51 g, la teneur totale en acides gras insaturés est comprise entre 32,85 g et 39,70 g, la teneur totale en acides gras mono insaturés est comprise entre 28,68 g et 39,20 g, la teneur totale en acides gras poly insaturés est comprise entre 3,15 g et 4,65 g, la valeur du rapport C16:0/C18:1 *cis* est comprise entre 0,68 et 1,20 et la valeur du rapport Oméga 6/Oméga 3 est comprise entre 2,5 et 5.

9. Produits à base de lait de vache selon la revendication 8.

## Claims

1. Food for dairy cows intended for producing milk, comprising, in extruded form, linseed as well as other components, **characterised in that** it comprises the following components in extruded form : more than 50% to 99% linseed, 1% tot 30% wheat and 1% to 20% seeds of legumes, these components being combined so that the amount of total fatty matter in the said food is between 23% and 30%.

2. Food for dairy cows according to Claim 1, **characterised in that** it comprises, in extruded form : 66% linseed, 20% wheat and 14% seeds of legumes.

3. Use of a food according to any one of Claims 1 to 2 for producing a food ration intended for a dairy cow.

4. Use of a food according to any one of Claims 1 to 2 **characterised in that** the said food is added to a daily food ration based on winter fodder which is chosen in particular from amongst maize silage, grass silage and hay.

5. Use according to Claim 4, **characterised in that** a portion of food corresponding to 10% tot 12% total dry matter ingested is added to the daily food ration based on winter fodder.

6. Use of a food according to any one of Claims 1 to 2, **characterised in that** the said food is added to a daily food ration based on grazed grass.

7. Use according to Claim 6, **characterised in that** a portion of food of 0.5 to 1.5 kg of dry matter is added to the daily food ration based on grazed grass.

8. Cows milk able to be obtained by means of the food according to any one of Claims 1 to 2 or by the use of this food in accordance with any one of Claims 3 to 7, whose fatty acid content is determined by gas chromatography, **characterised in that** the said fatty acid content for 100 g of total fatty acids is between the following values:
| for short-chain saturated fatty acids : | |
|---|---|
| caproic acid C6:0: | 1.7 - 2.7 g |
| caprylic acid C8:0: | 1 - 1.6 g |
| capric acid C10:0: | 1.6 - 4.20 g |
| lauric acid C12:0: | 2.80 - 4.25 g |
| myristic acid C14:0: | 10.50 -13.0 g |
| palmitic acid C16:0: | 23.90 - 31.60 g |
| | |
| for long-chain saturated fatty acids : | |
|---|---|
| stearic acid C18:0: | 12.50 -17.40 g |
| | |
| for long -chain unsaturated fatty acids : | |
|---|---|
| vaccinic acid C18:1 *trans*-11: | 2.50 - 6.00 g |
| oleic acid C18:1 *cis*-9+*cis*-11: | 24.00 - 29.00 g |
| linoleic acid C18:2 *cis*-9-12: | 1.60 - 3.90 g |
| linoleic acid C18:2 *trans*-9-12: | 0.50 - 1.00 g |
| linoleic acid C18:3 *cis*-9-12-15: | 0.60 -1.20 g |
| conjugated fatty acid (ruminic acid C18:2 *cis*-9 *trans*-11) | 0.70 - 3.35 g |
and the total saturated fatty acid content is between 60.30 g and 68.15 g, the total long-chain fatty acid content (= C18) is between 40 and 51 g, the total unsaturated fatty acid content is between 32.85 g and 39.70 g, the total monounsaturated fatty acid content is between 28.68 g and 39.20 g, the total polyunsaturated fatty acid content is between 3.15 g and 4.65 g, the value of the ratio C16: 0/C18:1 *cis* is between 0.68 and 1.20 and the value of the ratio Omega 6/Omega 3 is between 2.5 and 5.

9. Products based on cows milk according tot Claim 8.

## Patentansprüche

1. Milchkuhfutter, bestimmt für die Herstellung von Milch, das in extrudierter Form Leinsamen sowie weitere Bestandteile umfasst, **dadurch gekennzeichnet, dass** es die folgenden Bestandteile in extrudierter Form umfasst: mehr als 50 bis 99 % Leinsamen, 1 bis 30 % Weizen, 1 bis 20 % Hülsenfrüchte, wobei diese Bestandteile so kombiniert sind, dass der Gesamtfettgehalt besagten Futters zwischen 23 und 30 % liegt.

2. Milchkuhfutter gemäß Anspruch 1, **dadurch gekennzeichnet, dass** es in extrudierter Form umfasst: 66 % Leinsamen, 20 % Weizen und 14 % Hülsenfrüchte.

3. Verwendung eines Futters gemäß einem der Ansprüche 1 bis 2 für die Herstellung einer Futterration, die für eine Milchkuh bestimmt ist.

4. Verwendung eines Futters gemäß einem der Ansprüche 1 bis 2, **dadurch gekennzeichnet, dass** besagtes Futter einer täglichen Futterration auf der Basis von Winterfutter, das insbesondere ausgewählt ist unter: Maissilage, Grassilage, Heu, zugesetzt wird.

5. Verwendung gemäß Anspruch 4, **dadurch gekennzeichnet, dass** eine Futtermenge, die 10 bis 12 % aufgenommener Gesamttrockensubstanz entspricht, der täglichen Futterration auf der Basis von Winterfutter zugesetzt wird.

6. Verwendung eines Futters gemäß einem der Ansprüche 1 bis 2, **dadurch gekennzeichnet, dass** besagtes Futter einer täglichen Futterration auf der Basis von Weidegras zugesetzt wird.

7. Verwendung gemäß Anspruch 6, **dadurch gekennzeichnet, dass** eine Futtermenge von 0,5 bis 1,5 kg Trockensubstanz der täglichen Futterration auf der Basis von Weidegras zugesetzt wird.

8. Kuhmilch, die mit dem Futter gemäß einem der Ansprüche 1 bis 2 oder durch Verwendung dieses Futters gemäß einem der Ansprüche 3 bis 7 erhalten werden kann, deren Gehalt an Fettsäuren durch Gaschromatographie bestimmt wird, **dadurch gekennzeichnet, dass** besagter Gehalt an Fettsäuren pro 100 g Gesamtfettsäuren zwischen den folgenden Werten liegt:
| für die gesättigten Fettsäuren mit kurzer Kette: | |
|---|---|
| Capronsäure C6:0 | 1,7 - 2,7 g |
| Caprylsäure C8:0 | 1 -1,6 g |
| Caprinsäure C10:0 | 1,6 - 4,20 g |
| Laurinsäure C12:0 | 2,80 - 4,25 g |
| Myristinsäure C14:0 | 10,50 - 13,0 g |
| Palmitinsäure C16:0 | 23,90 - 31,60 g |
| für die gesättigten Fettsäuren mit langer Kette: | |
|---|---|
| Stearinsäure C18:0 | 12,50 - 17,40 g |
| für die ungesättigten Fettsäuren mit langer Kette: | |
|---|---|
| Vaccensäure C18:1 *trans*-11 | 2,50 - 8,00 g |
| Oleinsäure C18:2 *cis*-9 + *cis*-11 | 24,00 - 29,00 g |
| Linolsäure C18:2 *cis*-9-12 | 1,60 - 3,90 g |
| Linolsäure C18:2 *trans*-9-12 | 0,50 -1,00 g |
| Linolensäure C18:3 *cis*-9-12-15 | 0,60 -1,20 g |
| konjugierte Fettsäure (Ruminsäure C18:2 *cis*-9 *trans*-11) | 0,70 - 3,35 g |
und der Gesamtgehalt an gesättigten Fettsäuren zwischen 60,30 g und 68,15 g liegt, der Gesamtgehalt an Fettsäuren mit langer Kette (≥ C18) zwischen 40 und 51 g liegt, der Gesamtgehalt an ungesättigten Fettsäuren zwischen 32,85 und 39,70 g liegt, der Gesamtgehalt an einfach ungesättigten Fettsäuren zwischen 28,68 g und 39,20 g liegt, der Gesamtgehalt an mehrfach ungesättigten Fettsäuren zwischen 3,15 g und 4,65 g liegt, der Wert des Verhältnisses C16:0/C18:1 *cis* zwischen 0,68 und 1,20 liegt und der Wert des Verhältnisses Omega-6/Omega-3 zwischen 2,5 und 5 liegt.

9. Produkte auf der Basis von Kuhmilch gemäß Anspruch 8.
